# EUROPEAN PATENT SPECIFICATION

(11) **EP 1 755 352 B1**
(45) Date of publication and mention of the grant of the patent: **27.03.2013**
(21) Application number: 06023006.7
(22) Date of filing: 26.11.2001
(51) Int. Cl.: H04L 12/58, H04L 29/06, H04W 4/14

(54) **Wireless protocol system combined with SMS in mobile environment**
Drahtloses Protokollsystem in Kombination mit SMS in einer mobilen Umgebung
Système de protocole sans fil en combinaison avec SMS dans un environment mobile

(30) Priority: 27.11.2000 US 723543
(43) Date of publication of application: 21.02.2007
(62) Divisional of application: 01309908.0
(73) Proprietor: Sharp Kabushiki Kaisha, Osaka 545-8522 (JP)
(72) Inventor: Toshimoto, Michitaka, Higashihiroshima-shi Hiroshima 739-0262 (JP)
(74) Representative: Treeby, Philip David William

(56) References cited:
- EP-A- 1 039 399
- WO-A-97/08906
- GB-A- 2 344 491
- US-A- 6 119 167

## Description

### FIELD OF THE INVENTION

This invention relates to mobile terminals, or stations, having a web browser display capability and specifically to a Short Message Service (SMS) information preview capability providing access to web page summaries.

### BACKGROUND OF THE INVENTION

Wireless web browser service for cellular phones and personal communication systems (PCS) devices is a data service which connects a user's mobile station to the internet, or to a company network, and which uses a protocol called Wireless Application Protocol (WAP). The combination of WAP and SMS is in its infancy at this time.

At the present time, when a user of a mobile terminal, or mobile station (MS) having web browser capability desires to view information using the MS'S browser capability the user connects to the internet through the user's wireless service providers and navigates the internet very similarly to the manner in which the internet is navigated using a conventional personal computer. The user must first subscribe to the user's wireless provider's internet provision service, which is generally an optional service, and which has charges associated therewith over and above the charges for voice or conventional SMS. Once the user is an internet subscriber, the user accesses the internet much as is done with a conventional PC: the user traverses one web page after another until the desired information is located. While this is a relatively fast process on a PC, the vagaries of wireless communication are such that conventional browsing is more time consuming, and time charges accumulate by the minute, or fraction thereof.

In some situations, initial contact is made with an internet service while the MS is in stand-by mode, allowing the user to connect to a web browser page, then, after completing the connection, the user views the domain's home page, and, ultimately, reaches the desired web page, however, air time charges accumulate upon the initial connection, and the user cannot confirm the content of the web page without incurring air time charges. This is significant in the case of a user wishing to update information, such as a stock prices or airline arrival/departure time, and being forced repeatedly to view information which has not changed.

U.S. Patent No. 6,067,558 to Wendt, et al.*,* for *Method and Apparatus for providing increased content from* a *resource constrained device,* describes use of JAVA® applets and a user interface on a web server, wherein the applet runs on both a peripheral device interface and on the host machine content server, wherein an initial request is directed to the peripheral device having the applet summary thereon.

EP 1 039 399 discloses a system for extracting and relaying web page information having a connection to a communications network including a polling mechanism for polling the communications network to find changes in the area-of-interest; and an output mechanism for transmitting changed information to the user. This document also discloses a method of extracting and relaying web page information to a user as the web page information changes including identifying an area-of-interest on a web page; polling the web page; determining if information in the area-of-interest has changed according to a predetermined criteria; and transmitting changed information only to a user when the information changes.

### SUMMARY OF THE INVENTION

An object of the present invention is to provide a wireless protocol system providing internet content, which enable a user to confirm web page content without incurring air time charges.

An aspect of the present invention is set out in claim 1.

According to this aspect, it is possible to confirm the web page content by viewing the web content summary page on the mobile station having the web browser and the wireless access protocol template, before connecting to a conventional web server, that is, before incurring of the air time charges is started. As a result, the user can confirm the content of the web page before connecting to the conventional web server, without incurring the air time charges, unlike the conventional case.

Another object of the invention is to provide a WAP/SMS interface.

Still another object of the invention is to provide a web content summary page to a mobile station.

A further object of the invention is to transmit a web content summary page, generated by an ISP (internet service provider), to a mobile station.

This summary and objectives of the invention are provided to enable quick comprehension of the nature of the invention. A more thorough understanding of the invention may be obtained by reference to the following detailed description of the preferred embodiment of the invention in connection with the drawings.

### BRIEF DESCRIPTION OF THE DRAWINGS

Fig. 1 is a block diagram of the wireless protocol system of an embodiment of the invention.
Figs. 2(a) and 2(b) are representations of screen displays of mobile stations incorporating an embodiment of the invention, where Fig 2(a) is a representation of a screen display 1, and Fig. 2(b) is a representation of a screen display 2.
Fig. 3 is a block diagram illustrating an embodiment of the wireless protocol system of the invention.
Fig. 4 is a block diagram showing another embodiment of the wireless protocol system of the invention.
Fig. 5 is a block diagram illustrating still another embodiment of the wireless protocol system of the invention.

### DETAILED DESCRIPTION OF THE PREFERRED EMBODIMENT

This invention provides a wireless access protocol (WAP) and short message service (SMS) combination to allow viewing of a web content summary page(s) before a user incurs air time charges. This allows a user to confirm that the contents of the web site are of use to the user before a conventional connection is made to the domain name home page before air time charges begin.

Note that the wireless application protocol is a data communication protocol that is necessary for a wireless communication device, such as a cellular phone, to download web content (various information on internet). It is an advantage of the wireless application protocol that it does not require a large number of bits to transmit various data. The wireless application protocol is composed of (a) a file transfer Protocol (WSP; Wireless Session Protocol) for transferring a file written in content markup language for wireless communication devices, (b) a protocol (WTP; Wireless Transport Protocol) for sending a message from a client to a gateway provided in a public switch region, (c) a protocol (WDP; Wireless Datagram Protocol) for permissive communication between a mobile communication system and an upper layer protocol.

Therefore, a portal site or a content provider, which provide content via wireless communication, should convert data of HTML into the content markup language for wireless communication devices, because the data of HTML used via the internet are large in quantity. At present, the WAP is connected to the internet via a path that has been used by a mobile station to perform wireless connection with a base station, in such a manner that WAP is connected to an internet protocol access dedicated to the WAP through a gateway for internet connection. Therefore, another charge is to be incurred for the connection from the gateway to the internet. Various contents, which have been converted into the content markup language for wireless communication devices, are transmitted to a WAP sever.

In addition, a standard "WAP1.0" set in the WAP forum includes a tagging language WML for writing content to be transmitted/received. However, the "wireless application protocol" of the present specification is not limited to a communication protocol using WML, but may include a communication protocol that uses a content writing language other than WML, such as compact HTML, HDML/WML (a content writing language, very similar to WML), and the like.

The short message service is a character message service of a wireless communication system for transmitting/receiving a character message by communicating via a control channel, but not via a telephone channel.

The short message service has an upper limit in a number of characters to transmit. The upper limit, which is generally 160 characters, differs from the short message service to the short message service.

The short message service was, at first, employed as a standard in GSM digital cellular phone system, but, currently, PDC (Personal Digital Cellular; Japanese standard system for digital cellular phones), D-AMPS (Digital Advanced Mobile Phone service; American standard system for digital cellular phones), PHS (Personal Handy phone system), and other many wireless communication standards use the short message service. Therefore, the "short message service" of the present specification, by definition, includes character message service using the other wireless communication systems, besides GMS system.

The short message service is used without use of the communication channel for which the user is charged. Typically, a wireless carrier tends not to charge the user for connection from the base station to the mobile station, but is able to charge for connection from the mobile station to the base station, because the connection is controlled at the base station.

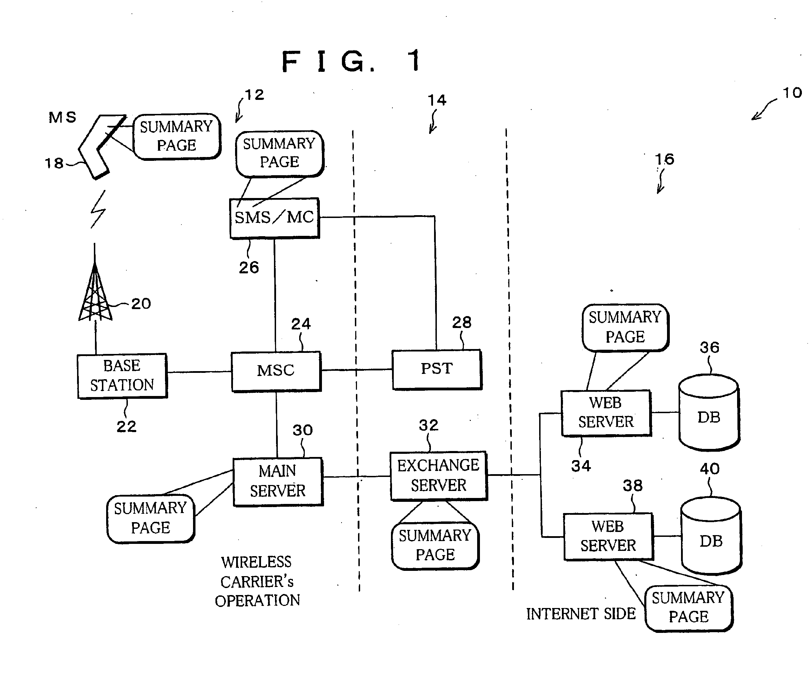

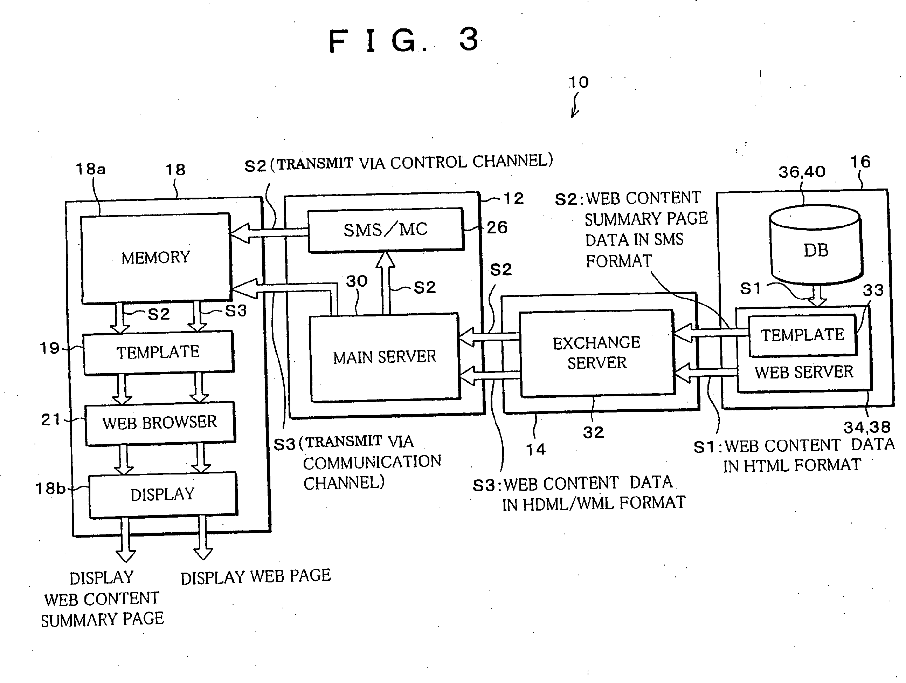

Fig. 1 depicts a configuration for a cellular system incorporating the invention, generally at 10. The system 10 is divided into three regions: a wireless carrier region (WCR) 12, a public switch region (PSR) 14, and an internet content region (ICR) 16. All connecting lines in Fig. 1 represent bi-directional data flow. Moreover, Fig. 3 illustrates a data flow regarding web content summary page in the system 10. Note that the wireless carrier region 12 and public switch region 14 are illustrated in a simplified manner in Fig. 3 for easy illustration.

In the wireless carrier region 12, a mobile station (MS) 18 is used to connect a user to voice data in the public switch region 14 and to internet content (web content data S1) in the internet content region 16. The internet content from ICR 16 is likely provided by an internet service provider (ISP), however, public switch companies and wireless carriers also function as ISPs, and in many instances, a single company may provide wireless, public switch and ISP services. The MS 18 likely uses a wireless protocol, such as CDMA, IS-136 or GSM, for wireless operation and TCP/IP for internet access.

The MS 18 and the base 22 communicate with each other by transmitting/receiving a radio wave between an antenna (not shown) of the MS 18 and an antenna 20 of the base station 22. The transmission/reception of the radio wave is carried out via multi-channels including a communication channel and a control channel.

Moreover, the MS 18 is, in advance, provided with a text web browser that is based in a content markup language for a wireless communication device, such as HDML/WML.

A mobile switching center (MSC) 24 controls a base station (BS) 22 and short message service/messaging center (SMS/MC) 26, and connects to a public switch telephone (PST) network 28 and a main server 30 for SMS service and voice communication service, respectively. In the case of an internet connection, main server connects to an exchange server 32, located in the PSR 14, which connects to web servers 34, 38, and their associated web content, stored in data bases 36, 40, respectively. The ICR 16 contains an ever increasing number of web servers, all of which are available to a user of the invention.

When the ICR 16 is connected to the PSR 14, the content of DBs 36, 40, or the contents of an Application Provider (web cont'ent data S1 in Fig. 3), which contents are generally stored in hyper text markup language (HTML), are converted from HTML to hand-held device markup language/wireless markup language (HDML/WML), and then to binary code for transmission to the MS 18. Typically, the exchange server 32 includes a data conversion function to convert data from HTML to HDML/WML and HDML/WML to binary code. The exchange server 32 also functions as a web gateway server.

The preceding scenario is known in the prior art, and requires that a user initiate a conventional link between the MS 18 and a web server, and operate a MS-based browser on-line, with the attendant air time charges. A user of a conventional MS is never able to view a web page of internet contents before connecting to the web servers 34 and 38, and in order to connect to a web server, the user incurs air time charges. Initially, a user will go to a main web page, which includes many portal site names, such as found at Amazon.com, Yahoo.com, CNN.com, etc. Next, a user selects a specific web portal and navigates by key strokes on the user's MS 18. Then, the user may view the home web page of the selected portal, which contains links to the items of interest. If the user is satisfied that the contents are of use, there is no problem, however, in the case where the contents are of no use to the user, the entire session, and associated air time charges, are wasted.

The arrangement of the invention shown in Fig. 3 requires that wireless carriers introduce a wireless data protocol, such as WAP, into their existing cellular infrastructure and that the ISPs and content application providers generate dedicated web content summary pages for cellular phone or personal digital assistant (PDA) (MS 18) by using HDML/WML, or Compact HTML.

Using the system and method of the invention, a user, having an MS 18 constructed according to the invention, can view a web content summary page on the display 18b (see Fig. 3) of the user's MS 18, which includes a mini-browser function using a protocol such as WAP or dedicated wireless protocol for Compact HTML.

This provides a relationship between the internet content service and the SMS service of the wireless carrier's infrastructure, allowing a user to view a web content summary page of participating internet contents before connecting to a web server, without incurring the conventional air time charges, and by using the wireless carrier's SMS service.

Known SMS systems have three functions: MT (Mobile Terminated), MO (Mobile Originated) and CB (Cell Broadcast). Wireless carriers generally provide MT SMS free of charge through a control channel. One message of MT SMS is limited to 160 characters. When a person wants to initiate a text transmission of SMS text information to a cellular/PCS phone (MS 18), an SMS message is input through an SMS message center (SMS/MC 26) using a PC or the keypad of cellular/PCS phone (MS 18). This message is stored in an SMS message center (SMS/MC26) and is sent to a user's cellular/PCS phone (MS 18) as an MT SMS message.

An internet content provider may provide a specific, web content summary page (web content summary page data S2 in SMS) for internet web information, having a character length which is less than the 160 character limit for MT SMS by using HDML/WML. The web content summary page (web content summary page data S2 in SMS) is generated by summarizing the HTML web content data S1 (web page content) in accordance with a template 33 installed in the web servers 34 and 38. The exchange server 32 receives these summaries (S2 in HDML/WML) from the web servers 34 and 38 of each content provider, or portal site, and compiles the summaries (S2 in HDML/WML) to form a matched screen, of up to 160 characters, which is converted to binary code (S2 in binary code) by the exchange server 32, and transferred to the main server 30 of the wireless carrier region 12. The wireless carrier region 12 transmits such data (S2 in binary code) as an MT SMS message to each MS 18. The mobile stations 18 display the web content summary page (S2 in binary code) as a function of a special template 19 (see Fig. 3) which is installed in the mobile device (MS 18), and which may be programmed by the user.

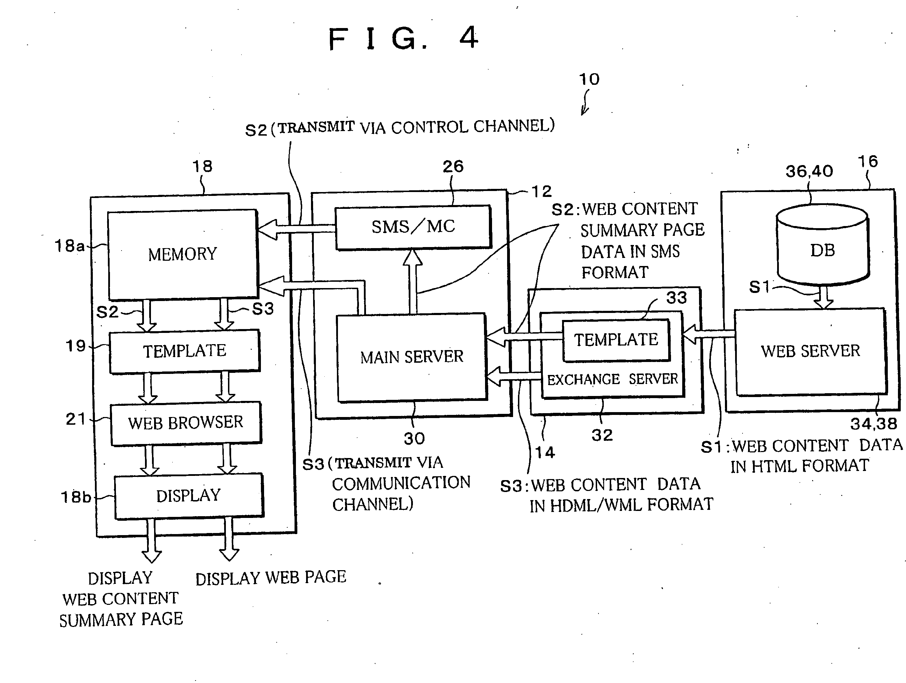

Alternately, as shown in Fig. 4, information (web content data S3 in HDML/WML) may be transmitted from web servers 34 and 38 to an exchange server 32, and the exchange server 32 may generate the web content summary page (web content summary page data S2 in binary code in SMS).

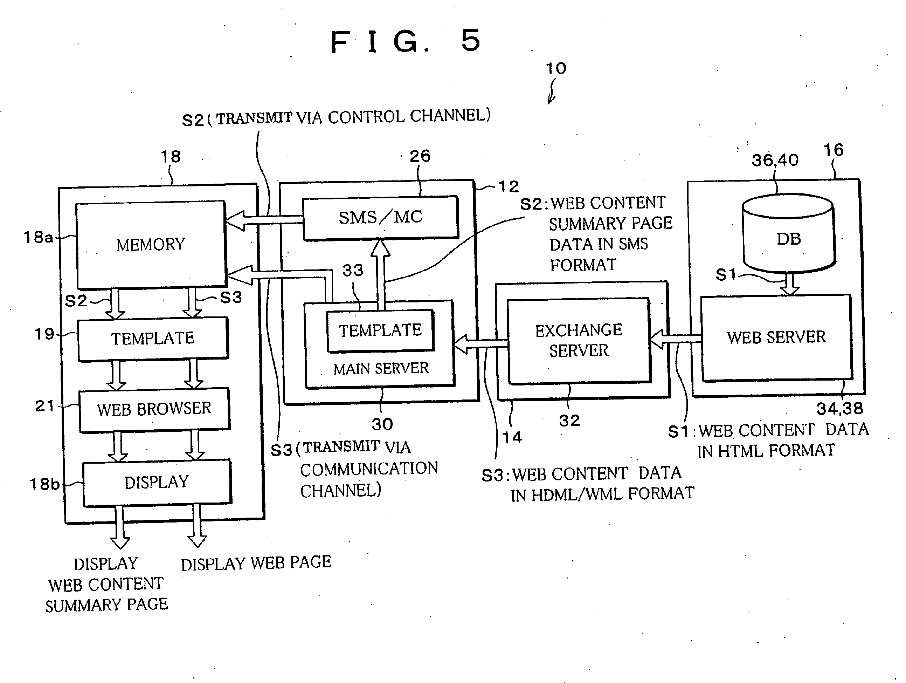

Further, as shown in Fig. 5, the service may be provided exclusively by the wireless carrier region 12, and the main server 30 is tasked with generating the web content summary pages from information (web content data S3 in binary code in HDML/WML) received from the public switch region 14 or internet content region 16.

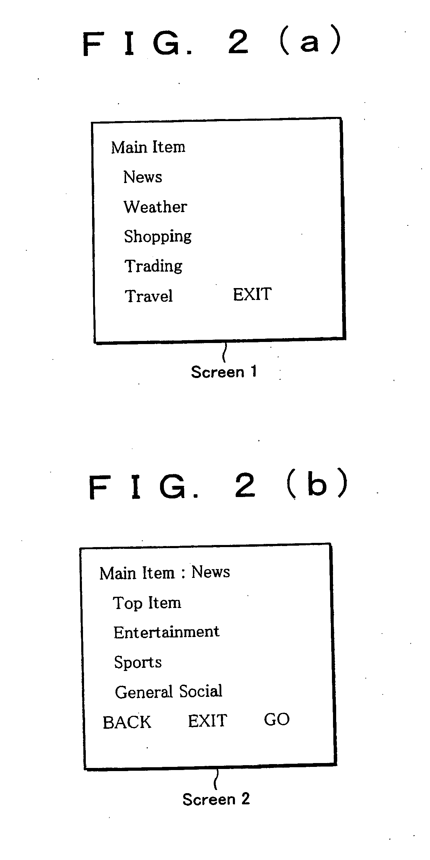

For example, and now referring to Fig. 2, fewer than 160 characters are contained in the two screens, a screen 1 and a screen 2, depicted therein. The screen 1 is a main screen, showing categories of items, such as news, weather, shopping, trading, travel, etc., each line of which has up to 10 characters. The screen 2 is a more detailed listing for each category, which may contain up to 20 characters. These screens are formed according to the template 19 which is installed in a mobile device (MS 18), to provide the desired information in the small screen format.

When a user selects any anchor point of an item of the screen 1, the screen changes to the associated version of the screen 2. When a user encounters content of interest on the screen 2, the user selects "GO," and the screen 2 changes to the full web page associated with the content of interest and the web content summary page. This commences the first true contact with the ICR 16, and also commences air time charges for the user.

More specifically, when "GO" is selected, the MS 18 requests the base station 22 to transmit data of the whole web page. The base station 22, responding this request, transmits to the MS 18 the data (web content data in HDML/WML) S3 of the whole web page. The data S3 is prepared by converting the web content data S1 in HTML, which has been transmitted from the web servers 34 and 38 from HTML to HDML/WML, then to binary code.

Main server 30 controls the transmission of the content page summary as an MT SMS, and only sends the summary to a user who requests transmission, which may be a standing request, whenever the contents of the full web page are updated. This service may be an optional, extra charge service, or may be part of a package. The MT SMS data is received and stored in the memory 18a (see Fig. 3) of the MS 18 (a cellular phone or PDA), and allows the user to view the information at any time, off-line. When the user sees an item of interest, the user may initiate connection to the web servers 34 and 38 which are connected to the DB containing the information.

As previously recited, a user may be using an MS 18 to monitor changing information, such as stock prices or airline arrival/departure information. One way to monitor such changing information is to maintain a near-constant link between the MS 18 and the ICR 16. This is a very expensive option. Many content providers accept requests for notification of updated information, which is generally provided by an Email alert, possible with a web page link. While such an Email message may be transmitted by SMS, the link still requires an MS 18 to the ICR 16 connection. A content provider may find it advantageous to provide customized updated information in the form of a web content summary page, which a user may view without an MS 18 to the ICR 16 connection. The benefit to the information provider is that fewer users will attempt to access the provider's server, particularly in times of heavy demand, which will reduce the impact on the provider's server. The benefit to the user is that the user receives the desired information and does not incur air time charges.

In the case where a content provider uses extensible markup language (XML) when generating its web contents, the content web summary page (web content summary page data S2 in SMS) may be generated by using specific tags, which are marks to indicate that S2 is summary information, such as <intro>. More specifically, in the arrangement shown in Fig. 3, in accordance with the template 33 in the web servers 34 and 38, the specific tags, such as <intro> are automatically attached to the web content data S1 in HTML, before and after the character data of a summary part showing a summary of the content thereof. Here, the summary part is so set that the character data between the specific tags have a number of the characters equal to or less than the upper limit. Any data located between <intro> and <intro> will be provided to the exchange server 32 as a web content summary page (web content summary page data S2 in SMS), as the exchange server 32 will recognize the tags and extract only the marked data (S2), that is, the data sandwiched between the specific tags, in HTML file data transmitted from the web servers 34 and 38. The marked data (S2), which has been extracted, is converted to binary code and sent to the main server 30. The main server 30 sends this data (S2 in binary code) to cellular phone as an MT SMS message.

As discussed above, with the present invention, a text message (web content summary page) having very small data amount, in which is prepared by the portal site or the content provider by summarizing various contents, is displayed in accordance with a display size of the MS 18. Here, the MS 18 is provided with the template 19, so that the text message transmitted in SMS is displayed in accordance with the template 19. Moreover, by the exchange server 32, the tags are automatically attached to all data that have been converted into WML or HDML. The tags are browser-processed or edited in the template 19 of the MS 18.

Moreover, as discussed above, a wireless protocol system of the present invention for use in providing short message service for a wireless receiver (18), is provided with a pre-installed template (19) provided in the wireless receiver (18); and template information (S2) supplied to the wireless receiver (18) via a wireless exchange server (32), whereby selected content information is displayed to the user in a readable form.

Furthermore, as discussed above, a wireless protocol system of the present invention for use between an internet content region (16), a public switch region (14) and a wireless carrier region (12), is provided with a mobile station (18) having a wireless access protocol template (19) and a web browser (21) therein, wherein the mobile station (18) is arranged to receive short message service formatted messages (S2) and to receive internet content (S3); a server (30, 32, 34, or 38), selected from the group of servers consisting of a web server (34 or 38) in the internet content region (16), an exchange server (32) in the public switch region (14) and a main server in a wireless carrier region (12), wherein the server (30, 32, 34, or 38) includes a template (33) for summarizing web page content (S1) and generating a web content summary page (S2) in the short message service format; and the short message service message center (26) for transmitting the web content summary page (S2) to the mobile station (18).

With the respective forgoing arrangements, it is possible to confirm the web page content by viewing the web content summary page on the mobile station (21) having the web browser (21) and the wireless access protocol template (19), before connecting to a conventional web server (34 or 38), that is, before the incurring of the air time charges is started. As a result, the user can confirm the content of the web page before connecting to the conventional web server (34 or 38), without incurring the air time charges, unlike the conventional case.

Moreover, as discussed above a method of the present invention of providing internet content via short message service, includes generating a web content summary page (S2) in a short message service format; transmitting the web content summary page (S2) in the short message service format to a mobile station receiver (18) having a web content summary page template (19) therein; and displaying the web content summary page (S2) to a user.

Furthermore, it is preferable that the generating is carried out in a server (30, 32, 34, or 38), wherein the server (30, 32, 34, or 38) is located in a region (12, 14, or 16) selected from the group of regions consisting of an internet content region (16), a public switch region (14) and a wireless carrier region (12).

With the respective forgoing arrangements, it is possible to confirm the web page content by viewing the web content summary page on the mobile station (21) having the web browser (21) and the wireless access protocol template (19), before connecting to a conventional web server (34 or 38), that is, before the incurring of the air time charges is started. As a result, the user can confirm the content of the web page before connecting to the conventional web server (34 or 38), without incurring the air time charges, unlike the conventional case.

Moreover, as discussed above, a wireless protocol system of the present invention for wireless communication between a base station (22, 24, 26), and a mobile station (18) via a communication channel and a control channel, the base station (22, 24, or 26), including (a) data transmission means (22, 24) for transmitting data of a web page via the communication channel, and (b) character information transmission means (22, 24, 26) for transmitting character information to the mobile station (18) only via the control channel, and the mobile station (18), including display means (18b, 21) that displays the web page, the wireless protocol system is provided with summary generating means (33) for summarizing content of the web page so as to generate summary information that has an information amount suitable for the character information transmission mean (22, 24, 26); and summary forwarding means (30, 32, 34, 38) for forwarding the summary information to the character information transmission means (22, 24, 26), whereby the display means (18b, 21) displays the summary information.

With the above arrangement, the summary information, in which the content of the web page is summarized, is transmitted, as the character information, to the mobile station (18) only via the control channel, and is displayed on the display means (18b, 21). Therefore, the user can see the summary information of the web page only by the communication of the character information via the control channel. Thus, when the wireless carrier offers a free providing service of the character information via the control channel, the user can see the summary information of the web page without incurring the charge thereof. As a result, the user is freed from the necessity of displaying the whole page of a web page he does not need. Therefore, an amount of the charge of the displaying the web page can be cut down.

Furthermore, the wireless protocol system of the present invention, wherein the display means (18b, 21) displays, as well as the summary information, a link character ("G0,") that is used for accessing to the whole web page, so that the data transmission means (22, 24) transmits data of the whole web page to the mobile station (18) when the link character is selected.

This enables the user to see the whole web page only by selecting the link character, thereby providing a wireless protocol system that can display the whole web page with a simple operation.

Thus, a method and system for wireless protocol system combined SMS in mobile environment has been disclosed. It will be appreciated that further variations and modifications thereof may be made within the scope of the invention as defined in the appended claims.

## Claims

1. A wireless protocol system for use (i) between an internet content region (16), a public switch region (14), and a wireless carrier region (12) and (ii) in providing short message service for a wireless receiver (18), the system comprising:
the wireless receiver (18), having provided therein a pre-installed template (19);
a wireless exchange server (32) in the public switch region (14);
a main server (30) in the wireless carrier region (12), the main server (30) being arranged to supply web content summary page (S2) in a short message service format to the wireless receiver (18); and
web servers (34, 38) in the internet content region (16), the web servers (34, 38) attaching specific tags to web content data (S1) in an HTML format, before and after a summary part showing a summary of content of the web content data (S1), to transmit HTML file data to the wireless exchange server (32),
the wireless exchange server (32) extracting data sandwiched between the specific tags in the HTML file data transmitted from the web servers (34, 38) and transmitting the data thus extracted, as web content summary page (S2), to the main server (30),
wherein the wireless receiver (18) is arranged to display the web content summary page summarising selected content to the user in a readable form according to the pre-installed template (19), and a connection is established between the wireless receiver (18) and a server corresponding to the content when the displayed web content summary page is selected by the user.

## Patentansprüche

1. Drahtlosprotokollsystem zur Verwendung (i) zwischen einer Internetinhaltsregion (16), einer öffentlichen Vermittlungsregion (14) und einer Drahtlos-Carrier-Region (12) und (ii) bei der Bereitstellung eines Kurzmitteilungsdiensts (Short Message Service) für einen drahtlosen Empfänger (18), wobei das System enthält:
den drahtlosen Empfänger (18), in dem eine vorinstallierte Vorlage (19) vorgesehen ist;
einen drahtlosen Exchange-Server (32) in der öffentlichen Vermittlungsregion (14);
einen Haupt-Server (30) in der Drahtlos-Carrier-Region (12), wobei der Haupt-Server (30) dafür ausgelegt ist, eine Webinhaltsübersichtsseite (S2) in einem Kurzmitteilungsdienst-Format zu dem drahtlosen Empfänger (18) zu liefern; und
Webserver (34, 38) in der Internetinhaltsregion (16), wobei die Webserver (34, 38) spezifische Tags an Webinhaltsdaten (S1) in einem HTML-Format vor und nach einem Übersichtsteil, der eine Inhaltsübersicht der Webinhaltsdaten (S1) zeigt, anheften, um HTML-Dateidaten zu dem drahtlosen Exchange-Server (32) zu übertragen,
wobei der drahtlose Exchange-Server (32) Daten, die zwischen spezifischen Tags in den HTML-Dateidaten, die von den Webservern (34, 38) übertragen werden, eingebettet sind, extrahiert und die so extrahierten Daten als Webinhaltübersichtsseite (S2) zu dem Haupt-Server (30) überträgt,
wobei der drahtlose Empfänger (18) dafür ausgelegt ist, die Webinhaltsübersichtsseite, die ausgewählten Inhalt für den Anwender in einer lesbaren Form in übereinstimmung mit der vorinstallierten Vorlage (19) zusammenfasst, anzuzeigen, und eine Verbindung zwischen dem drahtlosen Empfänger (18) und einem Server, der dem Inhalt entspricht, aufgebaut wird, wenn die angezeigte Webinhaltsübersichtsseite vom Anwender ausgewählt wird.

## Revendications

1. Système de protocole sans fil destiné à être utilisé (i) entre une région de contenu Internet (16), une région de commutation publique (14), et une région porteuse sans fil (12) et (ii) pour fournir un service de messages courts pour un récepteur sans fil (18), le système comprenant :
le récepteur sans fil (18) dans lequel est prévu un modèle préinstallé (19) ;
un serveur d'échange sans fil (32) dans la région de commutation publique (14) ;
un serveur principal (30) dans la région porteuse sans fil (12), le serveur principal (30) étant agencé pour fournir une page de résumé de contenu Web (S2) dans un format de service de messages courts au récepteur sans fil (18) ; et
des serveurs Web (34, 38) dans la région de contenu Internet (16), les serveurs Web (34, 38) attachant des balises spécifiques à des données de contenu Web (S1) dans un format HTML, avant et après une partie de résumé indiquant un résumé du contenu des données de contenu Web (S1), pour transmettre des données de fichier HTML au serveur d'échange sans fil (32),
le serveur d'échange sans fil (32) extrayant des données prises en sandwich entre les balises spécifiques dans les données de fichier HTML transmises depuis les serveurs Web (34, 38) et transmettant les données ainsi extraites, sous forme d'une page de résumé de contenu Web (S2), au serveur principal (30),
dans lequel le récepteur sans fil (18) est agencé pour afficher la page de résumé de contenu Web résumant un contenu sélectionné à l'utilisateur sous une forme lisible en fonction du modèle préinstallé (19), et une liaison est établi entre le récepteur sans fil (18) et un serveur correspondant au contenu lorsque la page de résumé de contenu Web affichée est sélectionnée par l'utilisateur.
